(19) Europäisches Patentamt
European Patent Office
Office européen des brevets

(11) **EP 3 490 138 A1**

(12) **EUROPEAN PATENT APPLICATION**
published in accordance with Art. 153(4) EPC

(43) Date of publication:
**29.05.2019 Bulletin 2019/22**

(51) Int Cl.:
**H02P 29/64** (2016.01)    **G01K 7/00** (2006.01)
**H02P 21/14** (2016.01)    **H02P 21/26** (2016.01)

(21) Application number: **17830967.0**

(22) Date of filing: **14.07.2017**

(86) International application number:
**PCT/JP2017/025799**

(87) International publication number:
**WO 2018/016448 (25.01.2018 Gazette 2018/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.07.2016 JP 2016143455**

(71) Applicant: **Nidec Corporation**
**Kyoto-shi, Kyoto 601-8205 (JP)**

(72) Inventors:
• **LIAN,Kar Foong**
**508771 (SG)**
• **GU,Huaxin**
**508771 (SG)**

(74) Representative: **Zimmermann, Tankred Klaus et al**
**Schoppe, Zimmermann, Stöckeler Zinkler, Schenk & Partner mbB Patentanwälte Radlkoferstrasse 2 81373 München (DE)**

(54) **MOTOR MODULE, MOTOR CONTROL DEVICE, TEMPERATURE ESTIMATION DEVICE, AND TEMPERATURE ESTIMATION METHOD**

(57)    [Object] To reduce error in the inference of winding temperature in a case in which the load state of a motor changes.

[Solution] A temperature inferring unit repeats processing to infer the electric resistance and temperature of windings in the stator of a motor. In the processing, the tentative electric resistance of the windings is calculated according to an equation that stipulates a relationship between electric resistance and a group of parameters used to control the rotation of the rotor, a resistance difference between the tentative electric resistance and electric resistance inferred last time is calculate, and the current electric resistance is inferred by adding the integrated value of calculated resistance differences to the initial value of the electric resistance. A resistance difference calculated when a change in the load state is detected is excluded from the integrated value.

FIG.7

**Description**

Technical Field

This application relates to a technology that infers the temperature of the stator windings of an electric motor.

Background Art

Heat generated from stator windings along with the operation of an electric motor (simply referred to below as the "motor") that has a plurality of windings in a stator may damage a material constituting the motor and may cause a change in the property of the material. Therefore, it is important to know the temperature of the stator windings (sometimes referred to below as "winding temperature") during the operation of the motor.

The temperature of the stator windings can be known by various methods. For example, there is a method in which a temperature sensor is placed in the vicinity of the windings and winding temperature is directly measured by using the temperature sensor. As the temperature sensor, a thermocouple, a resistive temperature device (RTD), or the like, for example, can be used. In the method in which a temperature sensor is used, there is a case in which it is hard to place a temperature sensor in the vicinity of the windings. This is also the problem that an increase in costs is brought.

It is also possible to infer winding temperature from the electric resistance of the stator windings (sometimes referred to below as "winding resistance") without using a temperature sensor. Since the winding temperature can be represented as a function of the winding resistance, winding temperature can be inferred from winding resistance.

Methods of obtaining wiring resistance are broadly classified into three methods. A first method is a method in which winding resistance is directly measured by using a measuring instrument. To directly measure a winding resistance, however, it is necessary to stop the motor. Therefore, winding temperature cannot be inferred during an operation.

A second method is a method in which a signal of a direct-current (DC) or an alternating current (AC) is supplied during the operation of the motor and winding resistance in inferred from the signal. In the second method, a signal to measure winding resistance is mixed into a signal to control the motor. Therefore, there is the possibility that the motion of the motor is impeded.

A third method is a method in which a relational expression such as a voltage equation for the motor is used to infer winding temperature from various parameters used to control the motor. Examples of the third method are disclosed in, for example, PTL 1 to 3. According to the methods in PTL 1 to 3, it can be thought that winding temperature can be inferred during the operation of the motor.

Citation List

Patent Literature

PTL 1: Japanese Unexamined Patent Application Publication No. 2012-130162
PTL 2: Japanese Unexamined Patent Application Publication No. 2013-146155
PTL 3: Japanese Unexamined Patent Application Publication No. 2014-230486

Summary of Invention

Technical Problem

The present disclosure provides a novel temperature inference technology that can reduce inference error in winding temperature in a case in which the load state of a motor changes.

Solution to Problem

A winding temperature inference method in an exemplary embodiment in the present disclosure is a method to infer the temperature of a plurality of windings in the stator of an electric motor. The method includes steps in which processing to infer the electric resistance and temperature of the plurality of windings is repeated. The processing includes a step of calculating the tentative electric resistance of the plurality of windings according to an equation that stipulates a relationship between electric resistance and a group of parameters that include voltage, current, and rotor speed, the parameters being used to control the rotation of the rotor, a step of calculating a resistance difference between the tentative electric resistance and electric resistance inferred last time, a step of detecting a change in a load state according to the group of parameters, a step of inferring the electric resistance by adding the integrated value of calculated resistance differences to the initial value of the inferred electric resistance, and a step of inferring the temperature of the windings according to the inferred electric resistance. In the step of inferring the electric resistance, of the resistance differences that have been calculated up to now, a resistance difference calculated when a change in the load state is detected is excluded from the integrated value.

The above comprehensive or specific aspects can be implemented by a device, a system, a method, an integrated circuit, a computer program, or a recording medium. Alternatively, the above comprehensive or specific aspects can also be implemented by any combination of a device, a system, a method, an integrated circuit, a computer program, and a recording medium.

Advantageous Effects of Invention

According to an embodiment in the present disclosure, it is possible to reduce inference error in winding temperature in a case in which the load state of a motor changes.

Brief Description of Drawings

[Fig. 1A] Fig. 1A is a diagram that illustrates the schematic structure of a motor module according to a first exemplary embodiment in the present disclosure.
[Fig. 1B] Fig. 1B is a diagram that schematically illustrates an example of the internal structure of a controller 300 in the first embodiment.
[Fig. 2] Fig. 2 is a block diagram that illustrates a more specific example of the structure of the MCU 300 in the first embodiment.
[Fig. 3] Fig. 3 is a diagram that schematically illustrates an example of the structure of an inverter circuit 400 in the first embodiment.
[Fig. 4A] Fig. 4A is a diagram that illustrates an example of time-dependent changes in winding resistance Rw under a certain condition.
[Fig. 4B] Fig. 4B is a diagram that illustrates an example of time-dependent changes in winding temperature Tw under a certain condition.
[Fig. 5] Fig. 5 is a flowchart that illustrates an example (comparative example) of basic processing by a temperature inferring unit 350.
[Fig. 6A] Fig. 6A is a graph that illustrates an example of time-dependent changes in measured values and inferred values of winding temperature in a situation in which the rotational speed of a rotor is constant and torque changes with time.
[Fig. 6B] Fig. 6B is a graph that illustrates an example of time-dependent changes in measured values and inferred values of winding temperature in a situation in which torque is constant and the rotational speed of the rotor changes with time.
[Fig. 7] Fig. 7 is a flowchart that illustrates a basic flow in temperature inference processing in the first embodiment.
[Fig. 8] Fig. 8 is a flowchart that illustrates another example of processing by the temperature inferring unit 350 in the first embodiment.
[Fig. 9] Fig. 9 is a flowchart that illustrates an example of processing in which each of a group of parameters used to calculate tentative winding resistance Rw is time-averaged and is used.
[Fig. 10] Fig. 10 is a flowchart that illustrates another variation of the first embodiment.
[Fig. 11A] Fig. 11A is a diagram that illustrates results in an experiment in which winding temperature was inferred by the method illustrated in Fig. 5 under a situation in which a load state changes.
[Fig. 11B] Fig. 11B is a diagram that illustrates results in an experiment in which winding temperature was inferred by the method (differential method) illustrated in Fig. 7 under a situation in which a load state changes.
[Fig. 12] Fig. 12 is a flowchart that illustrates an example of temperature inference processing in a second exemplary embodiment in the present disclosure.
[Fig. 13] Fig. 13 is a graph that illustrates effects in the second embodiment.
[Fig. 14] Fig. 14 is a flowchart that illustrates an example of processing in which an offset method in the second embodiment and the differential method are combined together.
[Fig. 15A] Fig. 15A is a graph that illustrates an example of time-dependent changes in winding temperature inferred by using only the offset method illustrated in Fig. 12.
[Fig. 15B] Fig. 15B is a graph that illustrates an example of time-dependent changes in winding temperature inferred by using a combination of the offset method and differential method illustrated in Fig. 14.

[Fig. 16] Fig. 16 is a flowchart that illustrates processing in a variation of the second embodiment.
[Fig. 17] Fig. 17 is a flowchart illustrating an example of control executed by a motor module.

Description of Embodiments

Exemplary embodiments in the present disclosure will be described below. However, more detailed descriptions than necessary may be omitted. For example, detailed descriptions of matter that is already well-known or repeated descriptions of substantially the same structure may be omitted. This is to prevent descriptions below from becoming more redundant than necessary and for easy understanding by those of ordinary skill in the art. Incidentally, the inventor provides the attached drawings and descriptions below so that those of ordinary skill in the art adequately understand the present disclosure, and the attached drawings and descriptions are not intended to restrict the main subjects described in the scope of the claims. In the descriptions below, the same or similar constituent elements will be assigned the same reference numerals.

(First embodiment)

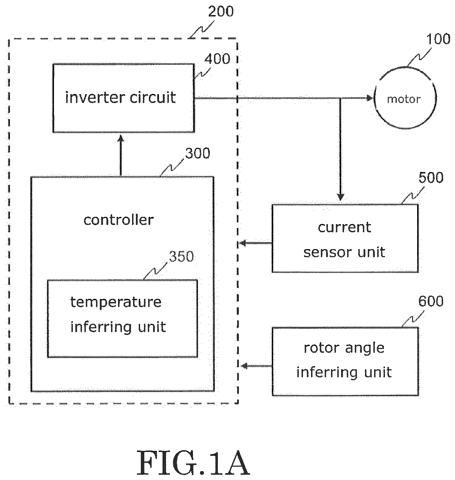

Fig. 1A is a diagram that illustrates the schematic structure of a motor module according to an exemplary embodiment in the present disclosure. This motor module has a motor 100, a motor control circuit (motor controller) 200, a current sensor unit 500, and a rotor angle inferring unit 600.

The motor 100 in this embodiment is an alternating-current motor that is driven by three-phase alternating currents. The motor 100 may be, for example, a permanent magnet synchronous motor. The motor 100 has a rotor and stator. If the motor 100 is a permanent magnet synchronous motor (sometimes referred to as a brushless DC motor), the rotor has permanent magnets and the stator has a plurality of windings (three-phase coils). The descriptions below will mainly assume an IPMSM (interior permanent magnet synchronous motor) in which permanent magnets are embedded in the interior of the rotor and that has magnetic saliency. However, the motor 100 is not limited to an IPMSM.

The current sensor unit 500 has one or a plurality of sensors that monitor currents, each of which flows in one of a plurality of windings. The current sensor unit 500 does not necessarily need to directly measure a current in each of the windings in three phases. If the sum of currents in three phases is always 0, for example, it is only necessary for the current sensor unit 500 to be capable of measuring currents only in two phases of the currents in three phases. A current in the remaining one phase can be obtained by a calculation. Therefore, even in a case in which currents in only two phases are measured, currents flowing in all windings can be monitored.

The rotor angle inferring unit 600 obtains the angular position of the rotor in the motor 100 by a measurement or calculation and creates a rotor position signal that indicates the angular position. The "angular position" of the rotor means a rotational angle (that is an electric degree and its unit is radian) from the reference state of the rotor. In some examples, the rotor angle inferring unit 600 can be implemented by a sensor that measures the angular position of the rotor (a hall element, a resolver, or rotary encoder, for example). The rotor angle inferring unit 600 is not limited to a sensor but can also be implemented by software executed by the motor control circuit 200. In this description, "inference" of a rotor angle by the rotor angle inferring unit 600 includes not only obtaining the rotor angle by a calculation but also measuring the rotor angle by using a sensor.

The motor control circuit 200 is connected to the motor 100. The motor control circuit 200 controls the rotation of the rotor by applying a voltage to the plurality of windings in the stator according to a control algorithm such as, for example, a known field oriented control (FOC) algorithm. The motor control circuit 200 in this embodiment has an inverter circuit 400 and a controller 300. The inverter circuit 400 applies three-phase alternating voltages to the plurality of windings in the stator in the motor 100 in response to a command from the controller 300. The controller 300 controls the inverter circuit 400 according to a control algorithm such as an FOC algorithm. Thus, desired three-phase alternating voltages are applied to the stator in the motor 100.

The controller 300 has a temperature inferring unit 350 that repeats processing to infer the electric resistance and temperature of the plurality of windings in the stator in the motor 100. Here, the "electric resistance of the plurality of windings" does not means the electric resistance of each of the plurality of windings but means the total electric resistance of the plurality of windings.

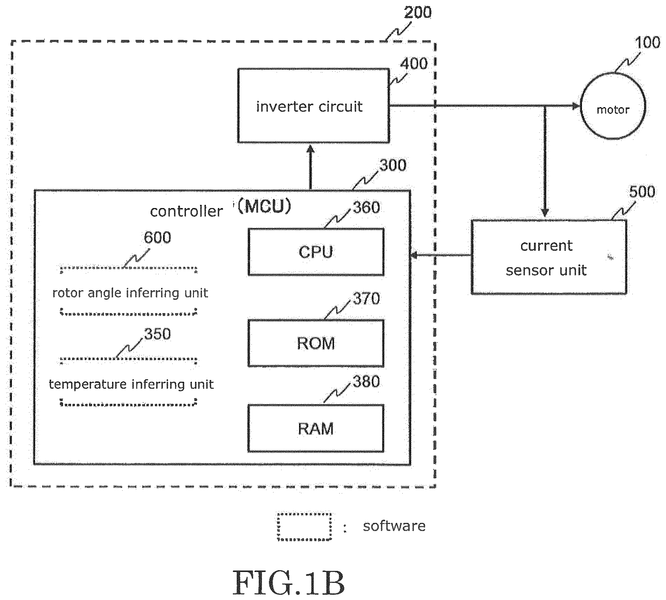

Fig. 1B is a diagram that schematically illustrates an example of the internal structure of the controller 300. In the example in Fig. 1B, the controller 300 is implemented by a microcontroller unit (MCU). The rotor angle inferring unit 330 and temperature inferring unit 350 can be implemented by software executed by the MCU. That is, the motor control circuit 200 has the temperature inferring unit 350 that repeats processing to infer the electric resistance and temperature of the plurality of windings.

In the descriptions below, it will be assumed that the controller 300 is an MCU. The controller (MCU) 300 has a CPU (central processing unit) 360, a ROM (read only memory) 370, and a RAM (random access memory) 380.

The ROM 370, which is a non-volatile memory, stores various types of software (computer programs) used to control the motor 100. The RAM 380, which is a volatile memory, is a work memory used when the CPU 360 executes a program. The RAM 380 also works as a storage medium that stores various parameters created by the CPU 360 in a calculation process. Programs used in this embodiment stipulate a known field oriented control (FOC) algorithm and a temperature inferring algorithm, which will be described later. FOC, which is also referred to as vector control, is used to control a three-phase alternating current motor such as a permanent magnet synchronous motor.

Although, in this embodiment, the temperature inferring unit 350 is implemented by software executed by the MCU 300, the temperature inferring unit 350 may be implemented by hardware (circuit) that has an equivalent function. The temperature inferring unit 350 can also be configured as a single device. In this case, the temperature inferring unit 350 is referred to as the "temperature inferring apparatus". Specific processing by the temperature inferring unit 350 will be described later. The rotor angle inferring unit 600 may also be implemented by individual hardware (sensor or circuit).

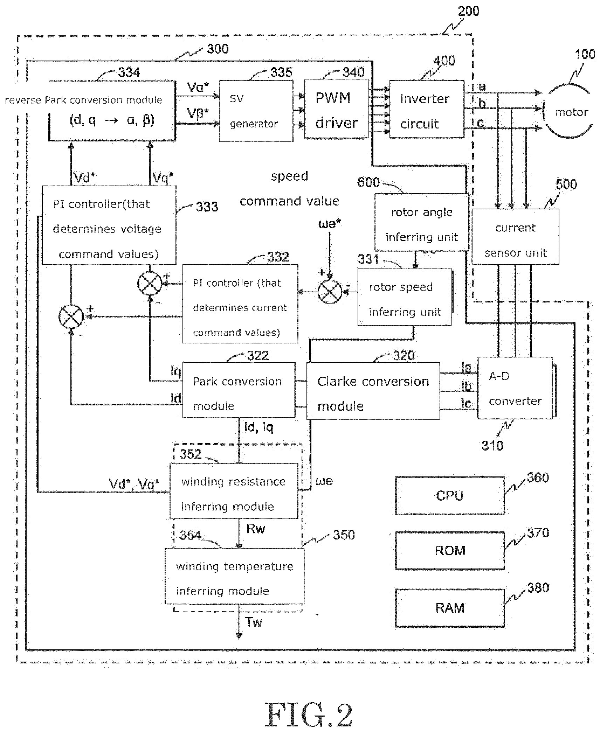

Fig. 2 is a block diagram that illustrates a more specific example of the structure of the MCU 300 in this embodiment. The MCU 300 in this embodiment controls the motor 100 according to an FOC algorithm. In Fig. 2, a plurality of functional blocks used in control for the motor 100 are illustrated. In particular, the MCU 300 in this embodiment infers the winding resistance and winding temperature of the motor 100 while controlling the motor 100. The inference of the winding resistance and winding temperature is performed by the temperature inferring unit 350.

In additions to the CPU 360, ROM 370, and RAM 380 described above, the MCU 300 has an A-D converter 310 and a PWM driver 340. Other constituent elements (functional blocks), illustrated in Fig. 2, of the MCU 300 are implemented when the CPU 360 executes software stored in the ROM 370. Part or all of the constituent elements implemented in this embodiment by software may be implemented by hardware (circuits). Conversely, part or all of the constituent elements implemented in this embodiment by hardware may be implemented by software. The PWM driver 340 and A-D converter 310 may be a circuit that is provided outside the MCU 300.

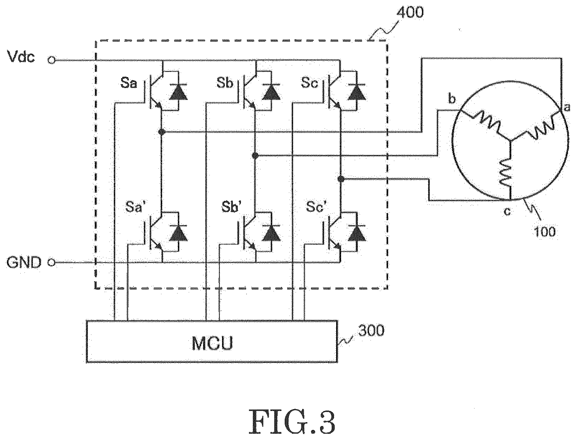

Fig. 3 is a diagram that schematically illustrates an example of the structure of the inverter circuit 400. The inverter circuit 400 in this embodiment has the circuit structure of a three-phase voltage-source inverter. The inverter circuit 400 is a bridge circuit that has six switching elements, Sa, Sa', Sb, Sb', Sc and Sc'. Each switching element can be implemented by, for example, a transistor such as an IGBT (insulated-gate bipolar transistor) or a MOSFET (metal oxide semiconductor field-effect transistor). The gate of each switching element is connected to the PWM driver 340 in the MCU 300. The state of electrical continuity (on)/ electrical non-continuity (off) of each switching element is switched in response to a control signal (PWM pulse signal) output from the PWM driver 340. The MCU 300 supplies three-phase alternating currents to the motor 100 by controlling an electrical continuity timing for each switching element. Incidentally, in this description, three phases are represented as a phase a, a phase b, and a phase c. For easy understanding, assuming that the number of pole pairs is 1, Fig. 3 schematically illustrates windings in three phases in the motor 100 as three coils. However, this is merely exemplary. Ways of forming a winding in each phase of an actual motor are various. The number of pole pairs is not limited to 1; the number may be 2 or larger.

Referring again to Fig. 2, a current flowing in a winding (coil) in each phase in the stator of the motor 100 is detected by the current sensor unit 500. The current sensor unit 500 may be, for example, a sensor that uses a hall element that magnetically detects a current in a noncontact manner in the vicinity of a line connected to the winding in each phase. In another example, the current sensor unit 500 may be a sensor that includes a plurality of shunt resistors connected between the switching elements Sa', Sb' and Sc' below the inverter circuit 400 and ground (GND). A current in each phase can be obtained from a voltage drop in the shunt resistor. Incidentally, as described above, the current sensor unit 500 does not need to measure all of currents in three phases but only needs to be capable of measuring currents in at least two phases of these. The current sensor unit 500 sends a signal indicating a current value detected in each phase to the MCU 300.

The A-D converter 310 in the MCU 300 converts analog signals indicating currents Ia, Ib, and Ic, received from the current sensor unit 500, in individual phases to digital signals and outputs them. A Clarke conversion module 320 performs coordinate conversion (Clarke conversion) on the currents Ia, Ib, and Ic, and outputs signals indicating a current I$\alpha$, which is an $\alpha$-axis component, and a current I$\beta$, which is a $\beta$-axis component. Here, the $\alpha$-axis matches the axis of the phase a, and the $\beta$-axis is an axis having a phase that advances 90 electric degrees from the $\alpha$-axis. Next, a Park conversion module 322 converts the currents I$\alpha$ and I$\beta$ to currents Id and Iq represented in a coordinate system that rotates together with the permanent magnets in the rotor of the motor 100 (Park conversion). As is well known, the d-axis is the axis in the main direction of a magnetic flux generated by the permanent magnets in the rotor, and the q-axis is an axis that advances 90 electric degrees from the d-axis.

To perform Park conversion, information about the rotational position (electric degrees) of the rotor is necessary. Information about the rotational position of the rotor is obtained from the rotor angle inferring unit 600. The rotor angle inferring unit 600 in this embodiment infers the rotational position (rotor angle $\theta$e) of the rotor by using a known sensor-less position detection technology. The rotor angle inferring unit 600 determines the rotor angle $\theta$e according to, for example, the induced voltage of the winding in each phase. A signal (rotor position signal) indicating the rotor angle $\theta$e determined by the rotor angle inferring unit 600 is sent to the Park conversion module 322 and a rotor speed inferring unit 331. The rotor speed inferring unit 331 calculates a rotor speed from the amount of change in rotor angle $\theta$e per

unit time. The "rotor speed" means the electric angle speed $\omega e$ (the unit is rad/s) of the rotor. The Park conversion module 322 converts the currents $I\alpha$ and $I\beta$ to the currents Id and Iq according to the rotor position signal. As described above, the d-axis current Id and q-axis current Iq are calculated according to a plurality of currents monitored by the current sensor unit 500 and to the rotor position signal created by the rotor angle inferring unit 600.

Signals indicating the d-axis current Id and q-axis current Iq calculated by the Park conversion module 322 are respectively compared with a command value Id* for the d-axis current and a command value Iq* for the q-axis current. Then, signals indicating deviations (Id* - Id) and (Iq* - Iq) are input into the PI controller 333. The PI controller 333 performs PI control and determines, from the signals indicating deviations (Id* - Id) and (Iq* - Iq), voltage command values Vd* and Vq* that eliminate the deviations. Here, the current command values Id* and Iq* are determined by the PI controller 332. The PI controller 333 determines the current command values Id* and Iq* according to a deviation ($\omega e^*$ - $\omega e$) between the rotor speed $\omega e$ calculated by the rotor speed inferring unit 331 and the speed command value $\omega e^*$. The PI controller 332 performs PI control and determines the current command values Id* and Iq* that eliminate the deviation ($\omega e^*$ - $\omega e$). Incidentally, the PI controllers 332 and 333 may determine each command value by performing other control such as, for example, PID control or P control, instead of PI control.

After the voltage command values Vd* and Vq* have been determined by the PI controller 333, a reverse Park conversion module 334 converts the voltage command values Vd* and Vq* to voltage command values $V\alpha^*$ and $V\beta^*$ in a stationary coordinate system (reverse Park conversion). Next, a spatial vector (SV) generator 335 determines the ratio of an electrical continuity (referred to as the on-time ratio) in one cycle of each switching element in the inverter circuit 400 by performing spatial vector modulation according to the voltage command values $V\alpha^*$ and $V\beta^*$. The PWM driver 340 outputs control signals (PWM pulse signals) used to make an on/off switchover for each switching element in the inverter circuit 400, according to the determined on-time ratio.

A series of operations described above is repeatedly executed in relatively short cycles (about 100 microseconds ($\mu$s), for example). Due to control described above, the rotor can rotate at a rotational speed that substantially matches the speed command value $\omega e^*$. Incidentally, the structure indicated in Fig. 2 is just an example, and the technology in the present disclosure is not limited to the structure in Fig. 2. For example, control signals for the inverter circuit 400 may be created by another method such as a triangular wave comparison method, instead of spatial vector modulation.

The MCU 300 in this embodiment further has the temperature inferring unit 350 that infers winding temperature. The temperature inferring unit 350 has a winding resistance inferring module 352 and a winding temperature inferring module 354. The winding resistance inferring module 352 infers winding resistance according to an equation that stipulates a relationship between a group of parameters used in control for the motor 100 and winding resistance, as will be described later. The winding temperature inferring module 354 infers winding temperature from winding resistance according to a relationship between winding resistance and winding temperature.

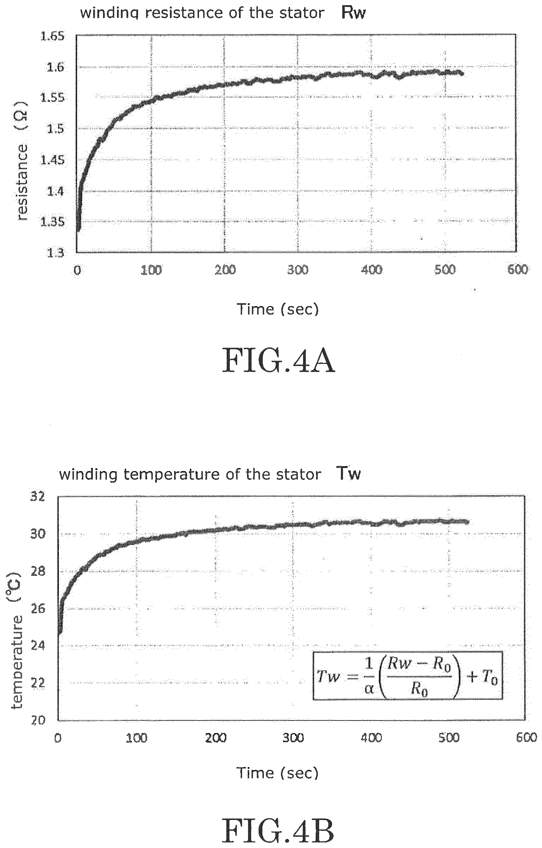

Fig. 4A and Fig. 4B illustrate an example of a relationship between the winding resistance Rw and winding temperature Tw of the stator. Fig. 4A is a diagram that illustrates an example of time-dependent changes in the winding resistance Rw under a certain condition. Fig. 4B is a diagram that illustrates an example of time-dependent changes in the winding temperature Tw under the same condition. Between the winding resistance Rw and the winding temperature Tw, there is a relationship that is approximately indicated by equation (1) below.

[Math. 1]

$$Tw = \frac{1}{\alpha}\left(\frac{Rw - R_0}{R_0}\right) + T_0 \qquad (1)$$

where T0 represents reference temperature (room temperature, for example), R0 represents winding temperature at the reference temperature, and $\alpha$ is a constant that depends on the material of the winding. If the material of the winding is, for example, copper, $\alpha$ is 0.004041/K. The winding temperature inferring module 354 in this embodiment calculates the winding temperature Tw from the inferred winding resistance Rw by using equation (1).

Next, an example of processing in which the temperature inferring unit 350 infers winding resistance will be described. To infer winding resistance, the temperature inferring unit 350 in this embodiment uses an equation that stipulates a relationship between a group of parameters used to control the motor 100 and winding resistance. The group of parameters includes parameters that indicate a voltage, a current, and a rotor speed (electric angular speed). The equation that stipulates a relationship between the group of parameters used to control the motor and winding resistance may be, for example, equation (2) below. For example, the temperature inferring unit 350 infers a tentative resistance at each time according to equation (2) below.

[Math. 2]

$$\begin{bmatrix} V_d \\ V_q \end{bmatrix} = \begin{bmatrix} R_w & -\omega_e L_q \\ \omega_e L_d & R_w \end{bmatrix} \begin{bmatrix} I_d \\ I_q \end{bmatrix} + \begin{bmatrix} 0 \\ \Psi_e \omega_e \end{bmatrix} \qquad (2)$$

where Rw is the electric resistance of the winding, Vq is the q-axis voltage, $\omega$e is the electric angular speed of the rotor, Id is the d-axis current, Iq is the q-axis current, Ld is the d-axis inductance of a plurality of windings, and $\psi$e is the magnetic flux linkage of the winding due to a magnetic flux created by the permanent magnets in the rotor.

Equation (2) is an equation that ignores a time derivative item in a voltage equation (3) below for a permanent magnet synchronous motor.
[Math. 3]

$$\begin{bmatrix} V_d \\ V_q \end{bmatrix} = \begin{bmatrix} R_w + pL_d & -\omega_e L_q \\ \omega_e L_d & R_w + pL_q \end{bmatrix} \begin{bmatrix} I_d \\ I_q \end{bmatrix} + \begin{bmatrix} 0 \\ \Psi_e \omega_e \end{bmatrix} \qquad (3)$$

where the symbol "p" in equation (3) represents time derivative. In a steady state, it can be thought that pLd is 0 and pLq is 0, so equation (2) holds.
When equation (2) is modified, the following two equations, (4) and (5), are obtained.
[Math. 4]

$$R_w = (V_d + \omega_e L_q I_q)/I_d \qquad (4)$$

[Math. 5]

$$R_w = (V_q - \omega_e L_d I_d - \Psi_e \omega_e)/I_q \qquad (5)$$

where, the magnetic flux linkage $\psi$e and the inductances Ld and Lq are known values obtained in a measurement performed in advance or from the specifications of the motor. In this embodiment, to simplify processing, the magnetic flux linkage $\psi$e and the time-dependent changes and temperature dependence of the inductances Ld and Lq will be ignored. From equations (4) and (5), it is found that if a group of parameters Vd, $\omega$e, Id, and Iq or a group of parameters Vq, $\omega$e, Id, and Iq is obtained, the winding resistance Rw can be inferred. In an actual calculation, the winding resistance Rw can be calculated by using one of equation (4) and equation (5). Since, the d-axis current Id is often set to a value near 0, equation (5) is typically used.

When equation (5) is used, a group of parameters to be used is the group of Vq, Id, Iq, and $\omega$e. The third item in equation (5) can be represented as "-Ke × $\omega$" by using the back electromotive force Ke and machine angular speed $\omega$ (= P × $\omega$e, P is the number of pole pairs) of the motor. Therefore, if equation (5) is sued, the temperature inferring unit 350 may obtain Rw by calculating "-Ke × $\omega$" instead of "-$\psi$e × $\omega$e". If "-Ke × $\omega$" is calculated, the machine angular speed $\omega$ of the rotor is also included in the group of parameters. The machine angular speed $\omega$ can be inferred by the rotor angle inferring unit 600. The constant Ke is a known value obtained in a measurement performed in advance or from the specifications of the motor. On the other hand, if equation (4) is used, a group of parameters to be used is the group of Vd, Id, Iq, and $\omega$e.

The voltage command values Vd* and Vq* determined by the MCU 300 according to an FOC algorithm are used for the parameters Vd and Vq. The parameters Id and Iq are the currents Id and Iq calculated by the Park conversion module 322. The parameter $\omega$e is the electric angular speed $\omega$e calculated by the rotor speed inferring unit 331. A group of these parameters can be stored in the RAM 380 each time they are created. When inferring winding resistance, the temperature inferring unit 350 retrieves necessary parameters from the RAM 380 and uses them.

A specific example of processing by the temperature inferring unit 350 in this embodiment will be described below. In the description below, a case in which winding resistance is inferred by mainly using equation (5) will be assumed. However, the equation to be used is not limited to equation (5) but may be another equation such as equation (4).

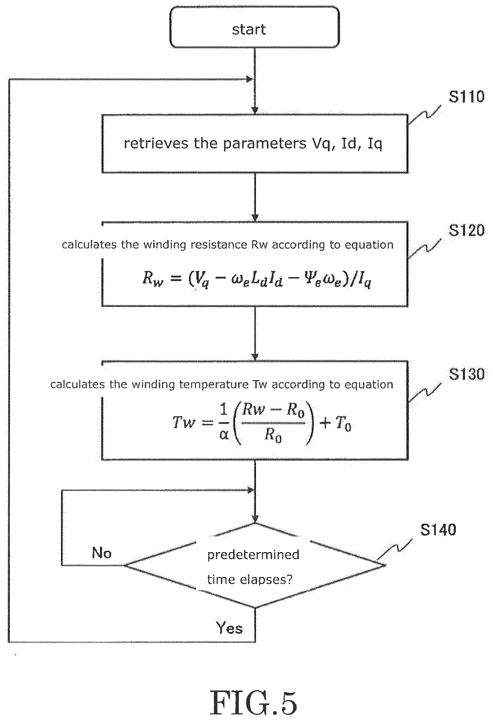

Fig. 5 is a flowchart that illustrates an example (comparative example) of basic processing by the temperature inferring unit 350. The temperature inferring unit 350 retrieves the parameters Vq, Id, Iq, and $\omega$e from the RAM 380 in step S110. The temperature inferring unit 350 calculates the winding resistance Rw according to equation (5) in step S120. The temperature inferring unit 350 calculates the winding temperature Tw according to equation (1) in step S130. After that, the temperature inferring unit 350 waits in step S140 until a predetermined time (one second, for example) elapses. After the elapse of the predetermined, the temperature inferring unit 350 returns to step S110. The temperature inferring unit 350 repeats the calculation (inference) of the winding resistance Rw and winding temperature Tw at intervals of the predetermined time.

According to the processing illustrated in Fig. 5, the winding temperature Tw can be inferred by a relatively simple calculation. In a steady state in which the load state of the motor 100 does not change, winding temperature can be inferred with high accuracy by the processing illustrated in Fig. 5.

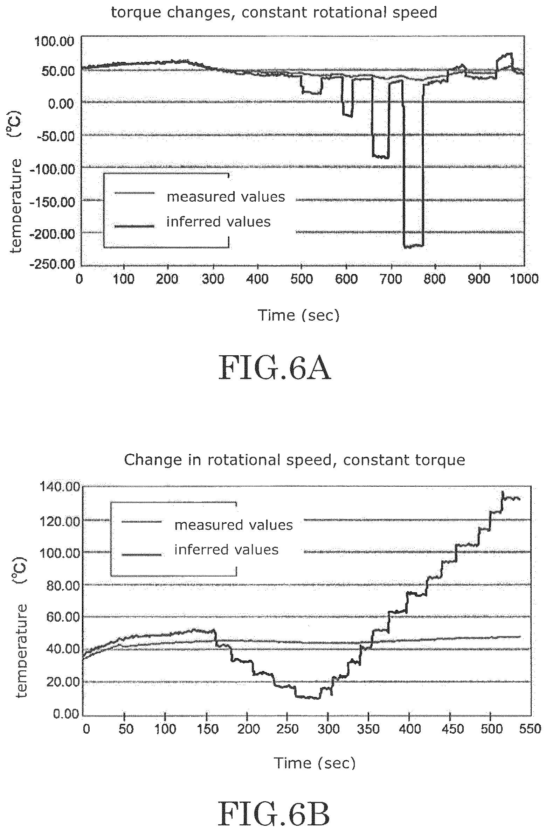

According to a study by the inventors, however, it was found that, in the processing illustrated in Fig. 5, if the load state of the motor 100 changes, error becomes large, so countermeasures are necessary. Here, the "load state" means an operation state determined by a combination of the rotational speed of the rotor and torque. Torque is determined by a combination of a d-axis current and q-axis current. Therefore, the "load state" can be said to be an operation state determined by a combination of the rotation speed of the rotor, a d-axis current, and a q-axis current. The problem that error in temperature inference becomes large due to a change in the load state will be described below while Fig. 6A and Fig. 6B are referenced.

Fig. 6A illustrates an example of time-dependent changes in measured values and inferred values of winding temperature in a situation in which the rotational speed of the rotor is constant and torque changes with time. Fig. 6B illustrates an example of time-dependent changes in measured values and inferred values of winding temperature in a situation in which torque is constant and the rotational speed of the rotor changes with time. Here, a measured value is the temperature of the windings that was measured by using a temperature sensor. An inferred value is temperature calculated by the method illustrated in Fig. 5. As illustrated in Fig. 6A and Fig. 6B, when the load state changes, winding temperature inferred from the winding resistance Rw calculated by using equation (5) largely deviates from actual temperature. As the main reason why this deviation occurs, it can be thought that a control parameter for the motor 100 largely changes along with a change in the load state and error becomes large in an equation in which a time derivative item is ignored as in equation (5).

In this embodiment, therefore, a new temperature inference method substituted for the method in Fig. 5 is applied. The temperature inferring unit 350 in this embodiment repeats processing (cycle) to infer the electric resistance and temperature of a plurality of windings. Processing at each time includes steps (1) to (4) below.

(1) The tentative winding resistance Rw of a plurality of windings is calculated according to an equation that stipulates a relationship between the electric resistance of the plurality of windings and a group of parameters (including voltage Vq, currents Id and Iq, and the rotor speed ωe) used to control the rotation of the rotor.
(2) A difference (resistance difference) between the tentative winding resistance Rw and electric resistance inferred last time.
(3) Electric resistance is inferred by adding the integrated value of calculated resistance differences to the initial value of the inferred electric resistance. Here, of the calculated resistance differences, a resistance difference exceeding a threshold is excluded from the integrated value.
(4) The temperature of the plurality of windings is inferred according to the inferred electric resistance.

This temperature inference method will be described below in detail.

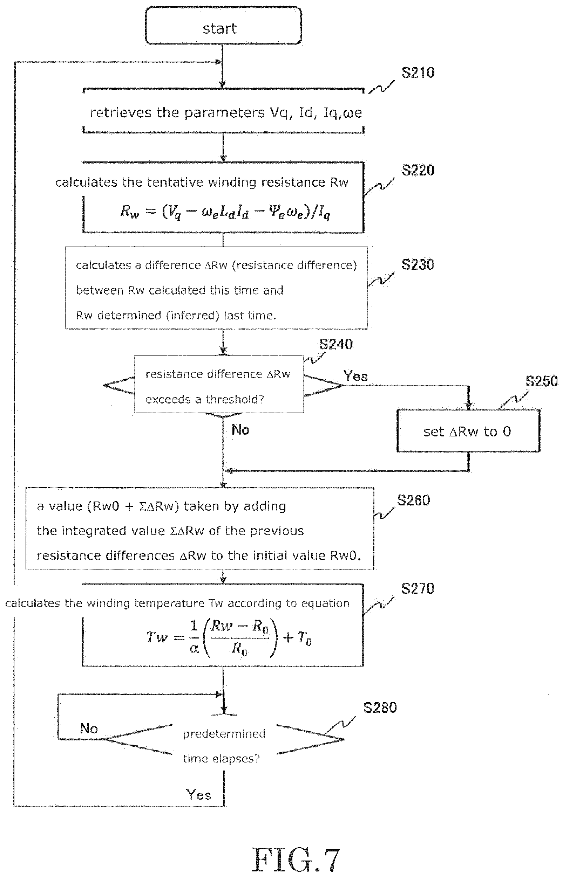

Fig. 7 is a flowchart that illustrates a basic flow in temperature inference processing in this embodiment. The temperature inferring unit 350 in this embodiment infers winding temperature at intervals of a predetermined time (one second, for example) by repeatedly executing processing described below. That is, processing by the temperature inferring unit 350 includes the steps described below.

Step S210: The temperature inferring unit 350 retrieves the parameters Vq, Id, Iq, and ωe from the RAM 380. The parameter Vq is the same as the voltage command value Vq* indicated in Fig. 2. Although the value of each parameter may be a value at that point in time, the value of the parameter may be, for example, a value taken by averaging values of the parameter that were calculated from the last temperature inference time to temperature inference at this time. Noise included in calculation results can be reduced by taking an average. An example of processing in a case in which an average is taken will be described later.

Step S220: The temperature inferring unit 350 calculates the tentative winding resistance Rw according to equation (5). The temperature inferring unit 350 may use another equation such as equation (4) instead of equation (5).

Step S230: The temperature inferring unit 350 calculates a difference ΔRw (resistance difference) between Rw calculated this time and Rw determined (inferred) last time. Here, Rw inferred last time is not always the value calculated according to equation (5) but an inferred value of the winding resistance Rw that was finally determined in the last processing.

Step S240: The temperature inferring unit 350 decides whether the resistance difference ARw exceeds a threshold that was set in advance. If ARw exceeds the threshold, the temperature inferring unit 350 proceeds to step S250. If ARw does not exceed the threshold, the temperature inferring unit 350 proceeds to step S260.

Step S250: The temperature inferring unit 350 sets ΔRw to 0 and proceeds to step S260.

Step S260: The temperature inferring unit 350 determines, as the current Rw, a value (Rw0 + ∑ΔRw) taken by adding the integrated value ∑ΔRw of the previous resistance differences ΔRw to the initial value Rw0. The initial value Rw0 may be Rw calculated according to equation (5) during, for example, first processing. Rw calculated by a computation of Rw0 + ∑ΔRw is processed as the current inferred value of winding resistance.

Step S270: The temperature inferring unit 350 calculates (infers) the winding temperature Tw from Rw inferred in step S260, according to equation (1).

Step S280: The temperature inferring unit 350 waits until a predetermined time elapses. After the elapse of the predetermined time, the temperature inferring unit 350 returns to step S210.

Processing in this embodiment differs from processing indicated in Fig. 5 in that Rw calculated according to equation (5) is not used as the inferred value of the winding resistance as it is. In this embodiment, a value taken by adding the difference ΔRw between Rw inferred last time and Rw calculated this time to Rw inferred last time is the inferred value of winding resistance. If the resistance difference ΔRw exceeds a threshold, however, ΔRw is processed as 0. That is, if ΔRw exceeds the threshold, that ΔRw is ignored. As a result, the same value as Rw inferred last time is processed as the current inferred value of winding resistance. The reason why ΔRw is processed in this way is that if ΔRw is large, the probability that the load state has largely changed is high and it can be thought that the reliability of the value of Rw calculated according to equation (5) is low. Due to this processing, the temperature inferring unit 350 can suppress the effect of variations in the load state and can more accurately infer temperature. In this description, a method of obtaining the electric resistance of windings by integrating ΔRw as in this embodiment may be referred to as a differential method.

In an example illustrated in Fig. 7, the MCU 300 detects a change in the load state according to the result of a comparison between ΔRw and a threshold. However, the MCU 300 may detect a change in the load state by another method. For example, the MCU 300 may detect a change in the load state according to a time-dependent change in at least one parameter, such as a current or a rotor speed, that determines the load state. The resistance difference ΔRw calculated at a time when a change in the load state is detected is excluded from the integrated value. As one example, an example will be described in which processing by the temperature inferring unit 350 includes processing to further exclude, from the integrated value, a resistance difference calculated at a time when a difference between the current value of the q-axis current Iq or rotor speed ωe and its last value exceeds a threshold, in addition to ΔRw.

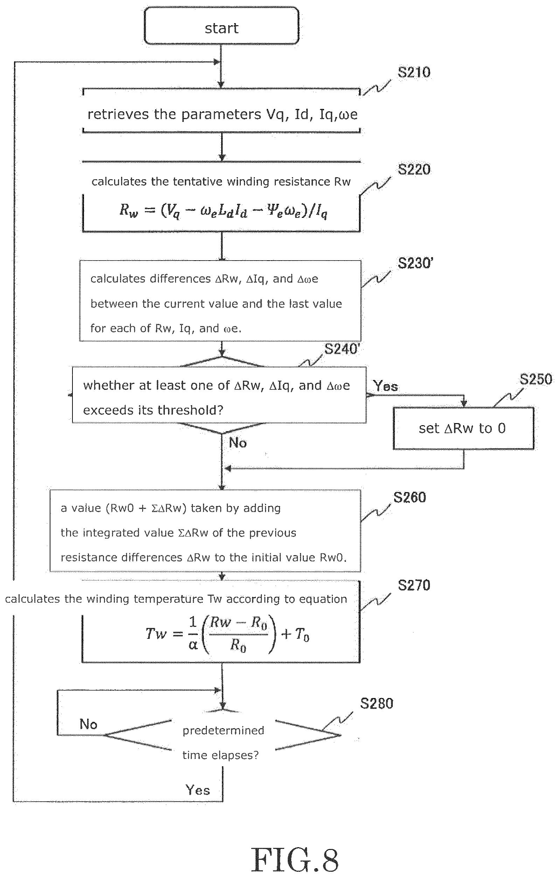

Fig. 8 is a flowchart that illustrates another example of processing by the temperature inferring unit 350 in this embodiment. The flowchart illustrated in Fig. 8 differs from the flowchart illustrated in Fig. 7 only in that steps S230 and S240 are respectively replaced with steps S230' and S240'. The temperature inferring unit 350 calculates differences ΔRw, ΔIq, and Δwe between the current value and the last value for each of Rw, Iq, and ωe in step S230'. Then, in step S240', the temperature inferring unit 350 decides whether at least one of ΔRw, ΔIq, and Δωe exceeds its threshold. If at least one of ΔRw, ΔIq, and Δωe exceeds its threshold, the temperature inferring unit 350 sets ΔRw to 0 in step S250 and proceeds to step S260. If none of ΔRw, ΔIq, and Δωe exceeds its threshold, the temperature inferring unit 350 proceeds to step S260. The subsequent operation is the same as the operation illustrated in Fig. 7.

In the example illustrated in Fig. 8, a change in the load state is detected in consideration of not only the magnitude of ΔRw but also the magnitudes of ΔIq and Δωe. Accordingly, even if ΔRw falls below the threshold, when ΔIq or Δωe is large, that ΔRw is not added to the last inferred resistance value. Due to this operation, accuracy in temperature inference is further improved.

The temperature inferring unit 350 can detect a change in the load state according to at least one of a group of parameters used to calculate the tentative winding resistance Rw, without being limited to the above example. If the temperature inferring unit 350 detects a change in the load state, the temperature inferring unit 350 can suppress error by excluding the resistance difference ΔRw from the integrated value.

Next, a variation of the differential method in this embodiment will be described.

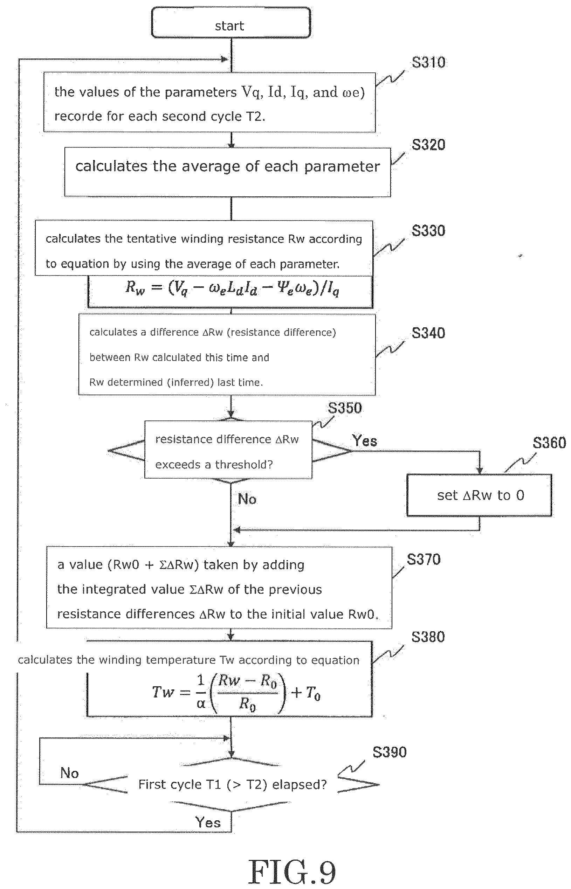

Fig. 9 is a flowchart that illustrates an example of processing in which each of a group of parameters used to calculate the tentative winding resistance Rw is time-averaged and is used. Here, a cycle in which winding temperature is inferred will be referred to as a first cycle T1, and a cycle in which the group of parameters are calculated will be referred to as a second cycle T2. The first cycle T1 is longer than the second cycle T2. The temperature inferring unit 350 obtains the average value of each parameter over the first cycle and calculates the tentative winding resistance Rw by using the average value of each parameter. The second cycle T2 is a cycle in which each parameter is calculated according to an FOC algorithm. The second cycle T2 may be a short time of, for example, about 100 microseconds. By contrast, the first cycle T1 may be, for example, about 10000 times the second cycle T2 (about one second). Winding temperature does not so rapidly change from the viewpoint of time. To suppress the amount of calculation, therefore, winding temperature is calculated at a frequency lower than the calculation cycle of each parameter. The first cycle T1 may be set to, for example, about 10 milliseconds to about five seconds. The second cycle T2 may be set to, for example, about 20 microseconds to about 500 microseconds. However, the cycles T1 and T2 are not limited to these numerical ranges.

In the example illustrated in Fig. 9, the value of each parameter calculated in the second cycle T2 is recorded in the RAM 380 each time a calculation is performed. Temperature inference processing at each time in this variation includes steps S310 to S390 illustrated in Fig. 9. First, the temperature inferring unit 350 acquires, from the RAM 380, the values of the parameters Vq, Id, Iq, and ωe, the values being recorded for each second cycle T2 (step S310). If the first cycle T1 is 10000 times the second cycle T2, the number of values of each parameter is 10000. The temperature inferring unit 350 calculates the average of each parameter (step S320). When the temperature inferring unit 350 performs temperature inference once each time each parameter is calculated 10000 times, for example, the temperature inferring unit 350 averages 10000 values of each parameter. The temperature inferring unit 350 calculates the tentative winding resistance Rw according to equation (5) by using the average of each parameter (step S330). Subsequent steps S340 to S390 are respectively similar to steps S230 to S280 illustrated in Fig. 7. Incidentally, the "first cycle T1" in step S390 in Fig. 9 is the same as the "predetermined time" in step S280 in Fig. 7.

In the example illustrated in Fig. 9, the tentative winding resistance Rw is calculated by using the value taken by averaging each parameter over the first cycle. Thus, it is possible to reduce noise and improve a signal-to-noise ratio (SN ratio).

In the example illustrated in Fig. 9, a change in the load state is detected according to the magnitude of ΔRw in steps S340 and S350, as in the example illustrated in Fig. 7. A change in the load state may be detected according to the magnitude of at least one of ΔRw, ΔIq, and Δωe without being limited to this example, as in, for example, the example illustrated in Fig. 8.

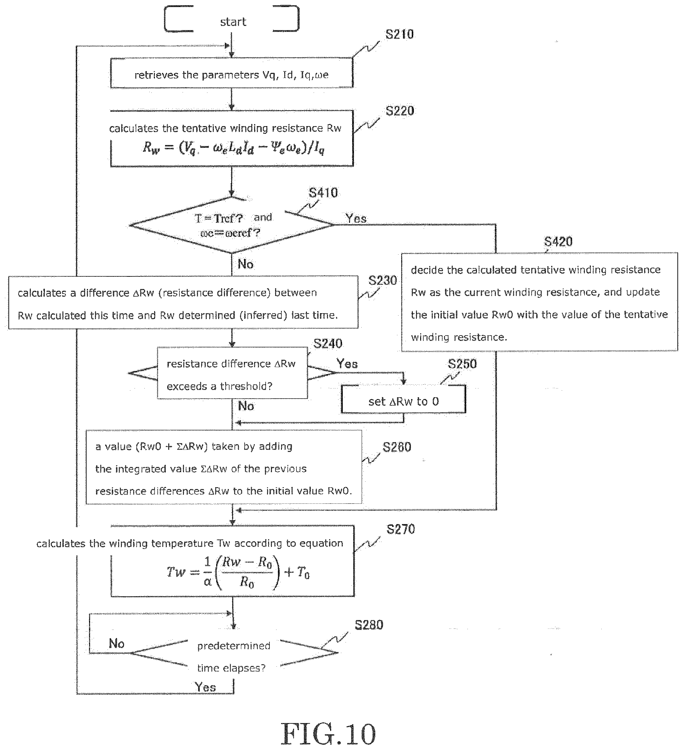

Fig. 10 is a flowchart that illustrates another variation of this embodiment. Processing illustrated in Fig. 10 differs from processing illustrated in Fig. 7 in that steps S410 and S420 are added after step S220. Other points are the same as in processing illustrated in Fig. 7. In the example in Fig. 10, the temperature inferring unit 350 decides, in processing to infer the electric resistance of the winding at each time, whether the load state is similar to a reference state according to a group of parameters. If the load state is similar to the reference state, the temperature inferring unit 350 decides (infers) the calculated tentative winding resistance Rw as the current winding resistance Rw. In addition, the temperature inferring unit 350 updates the initial value Rw0 of the winding resistance with the value of the current tentative winding resistance Rw. In this description, this update operation is referred to as "reset".

More specifically, the temperature inferring unit 350 decides whether the load state is similar to the reference state, according to the values of torque T and the rotor speed ωe. The temperature inferring unit 350 may make a decision according to, for example, another parameter such as the value of the q-axis current Iq, instead of the torque T. In the example in Fig. 10, the temperature inferring unit 350 decides whether the torque T matches a reference value Tref and the rotor speed ωe matches a reference value ωref (step S410). Here, "match" means that a difference is adequately small. If, for example, the difference is smaller than a threshold, it is decided that there is a match (or similarity). If the temperature inferring unit 350 decides that the torque T and rotor speed ωe are similar to their reference values, the temperature inferring unit 350 decides the calculated tentative winding resistance Rw as the current winding resistance. In addition, the temperature inferring unit 350 updates the initial value Rw0 with the value of the tentative winding resistance (step S420). In subsequent processing, winding resistance and winding temperature are inferred by using the updated initial value Rw0.

As described above, in this variation, steps to infer the electric resistance of the winding include step S410 in which a decision is made as to whether the load state is similar to the reference state according to a group of parameters and step S420 in which, if the load state is similar to the reference state, the calculated tentative electric resistance is taken as the current inferred value of the electric resistance and the initial value of the electric resistance is updated with the value of the tentative electric resistance.

In the differential method in this embodiment, the resistance difference ΔRw is added to the initial value Rw0 of winding resistance in processing at each time, so error is likely to be accumulated. If the load state is similar to the reference state, therefore, it is effective to reset the initial value with the value of the resistance Rw at that time as in the example illustrated in Fig. 10. Due to a reset operation, it is possible to suppress the accumulation of noise and to more accurately perform temperature inference. Incidentally, the reset operation indicated in Fig. 10 is not limited to the operation illustrated in Fig. 7, but may be combined with another operation in Fig. 8, Fig. 9, or the like.

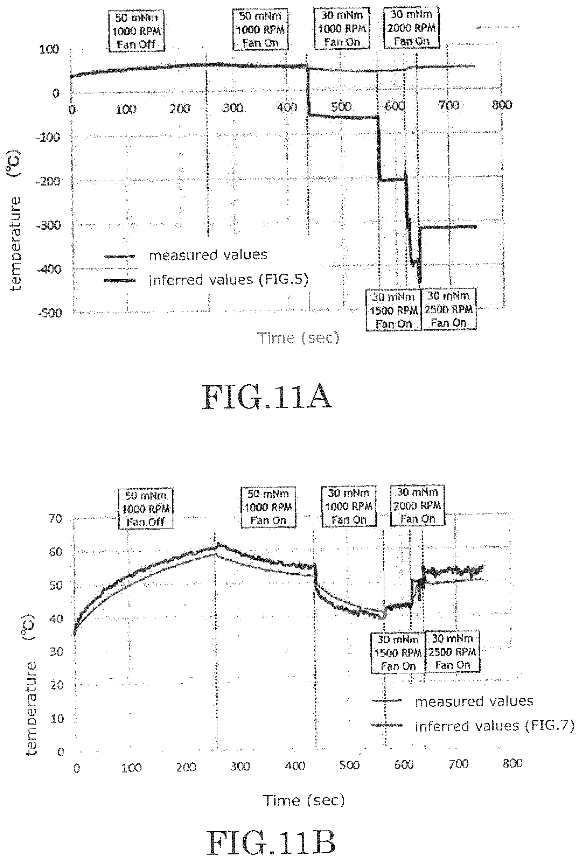

Next, effects in this embodiment will be described while Fig. 11A and Fig. 11B are referenced.

Fig. 11A is a diagram that illustrates results in an experiment in which winding temperature was inferred by the method (comparative example) illustrated in Fig. 5 under a situation in which the load state changes. Fig. 11B is a diagram that illustrates results in an experiment in which winding temperature was inferred by the method (differential method) illustrated in Fig. 7 under the same situation. In Fig. 11A and Fig. 11B, results obtained by measuring winding temperature by using a temperature sensor are also indicated. In this experiment, winding temperature was inferred by the methods in Fig. 5 and Fig. 7 and was measured with the temperature sensor while the torque (unit: mNm) of the motor, its rotational speed per unit time (unit: RPM), and ON/OFF of a fan that cools the motor were changed. As seen from Fig. 11A, in the method in the comparative example illustrated in Fig. 5, when the load state (torque or rotational speed) of the motor changes, the inferred values of temperature largely deviate from measured values. By contrast, when the differential method illustrated in Fig. 7 is used, as illustrated in Fig. 11B, deviation from measured values is suppressed. From this result, the effectiveness of the differential method in this embodiment was confirmed.

As described above, the method, in this embodiment, of inferring the temperature of a plurality of windings in the stator of a motor includes steps in which processing to infer the electric resistance and temperature of the plurality of windings is repeated. The processing includes steps (1) to (5) below.

(1) Step of calculating the tentative electric resistance of the plurality of windings according to an equation that stipulates a relationship between electric resistance and a group of parameters that include voltage, current, and rotor speed, the parameters being used to control the rotation of the rotor

(2) Step of calculating a resistance difference between tentative electric resistance and electric resistance inferred last time

(3) Step of detecting a change in a load state according to the group of parameters

(4) Step of inferring electric resistance by adding the integrated value of calculated resistance differences to the initial value of the inferred electric resistance Here, of the calculated resistance differences, a resistance difference calculated when a change in the load state is detected is excluded from the integrated value.

(5) Step of inferring the temperature of the plurality of windings according to the inferred electric resistance

Due to the processing described above, even if the load state of the motor changes, the temperature of the stator windings can be inferred with high accuracy.

(Second embodiment) Next, a second embodiment in the present disclosure will be described. The structure of a motor module in this embodiment is similar to the structure in the first embodiment. In this embodiment, an algorithm used to infer winding resistance differs from the first embodiment. Points differing from the first embodiment will be described below.

In processing at each time, the temperature inferring unit 350 in this embodiment infers the electric resistance of a plurality of windings in the stator according to the equation below.

[Math. 6]

$$R_w = (V_q - \omega_e L_d I_d - \Psi_e \omega_e)/I_q + f(I_q, \omega_e) \qquad (6)$$

where $f(I_q, \omega e)$ is a function of $I_q$ and $\omega e$.

In this embodiment, winding resistance is calculated by using equation (6), instead of the differential method in the first embodiment or in addition to the differential method. An offset item $f(I_q, \omega e)$, which is not present in the right side of equation (5), is added to the right side of equation (6). By introducing this offset item that depends on the q-axis current $I_q$ and electric angular speed $\omega e$, it is possible to suppress error due to variations in the load state. In this description, the method of inferring winding resistance by using an equation in which an offset item is introduced will sometimes be referred to as the offset method.

According to a study by the inventors, the offset item $f(I_q, \omega e)$ can be reprsented as $\alpha(\omega e - \omega 0)$. Here, $\alpha$ is a parameter that depends on $I_q$ and $\omega e$ and $\omega 0$ is the electric angular speed of the rotor in a reference state (a state at room temperatiure, for example). By appropriately settting the parameter $\alpha$, it is possible to supress the effect of variations in the load state.

To be more specific, the parameter $\alpha$ is determined from equation (7) below.

[Math. 7]

$$\alpha = C_1 T^2 + C_2 T + C_3$$
$$T = D_1 I_q + D_2$$
$$D_1 = k_1 \omega_e + k_2 \qquad (7)$$
$$D_2 = k_3 \omega_e + k_4$$

where C1, C2, C3, k1, k2, k3, and k4 are constants determined by an experiment or the like. By appropriately setting these constants, it is possibel to incease the accuracy of the offset item.

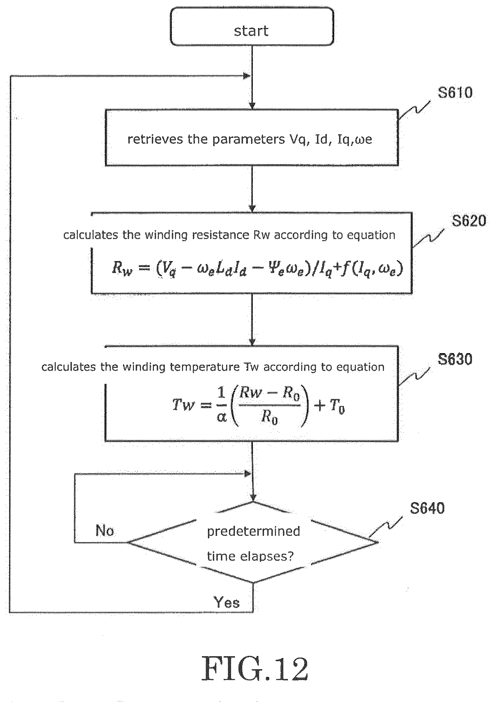

Fig. 12 is a flowchart that illustrates an example of temperature inference processing in this embodiment. Temperature inference processing in this embodiment includes processing in steps S610 to S640 indicated in Fig. 12. The temperature inferring unit 350 retrieves the parameters Vq, Id, Iq, and ωe from the RAM 380 in step S610. The temperature inferring unit 350 calculates the winding resistance Rw according to equation (6) in step S620 (step S620). The temperature inferring unit 350 calculates the winding temperature Tw according to equation (1) in step S630 as in the first embodiment. The temperature inferring unit 350 waits until a predetermined time (equivalent to the first cycle described above) in step S640. After the elapse of the predetermined time, the temperature inferring unit 350 executes step S610 again. Due to processing described above, even if the load state changes, temperature inference can be more accurately performed.

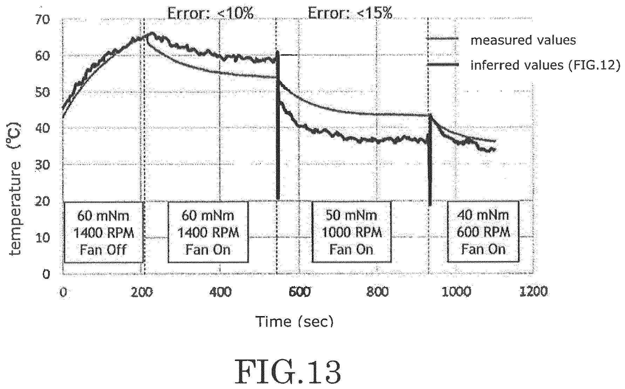

Fig. 13 is a graph that illustrates effects in this embodiment. Fig. 13 illustrates an example of time-dependent changes in the inferred values and measured values of winding temperature. The inferred values are the values of winding temperature inferred by the method illustrated in Fig. 12, and the measured values are temperature measured by a temperature sensor. As seen from Fig. 13, error falls within about 15%. When compared with the results in Fig. 11A, it is found that error can be greatly reduced by the offset method in this embodiment.

As described above, according to the offset method, error in the estimation of winding resistance and winding temperature can be reduced. At the moment at which the load state changes, however, error becomes large as illustrated in Fig. 13. To reduce this error, it suffices to use the differential method described in the first embodiment.

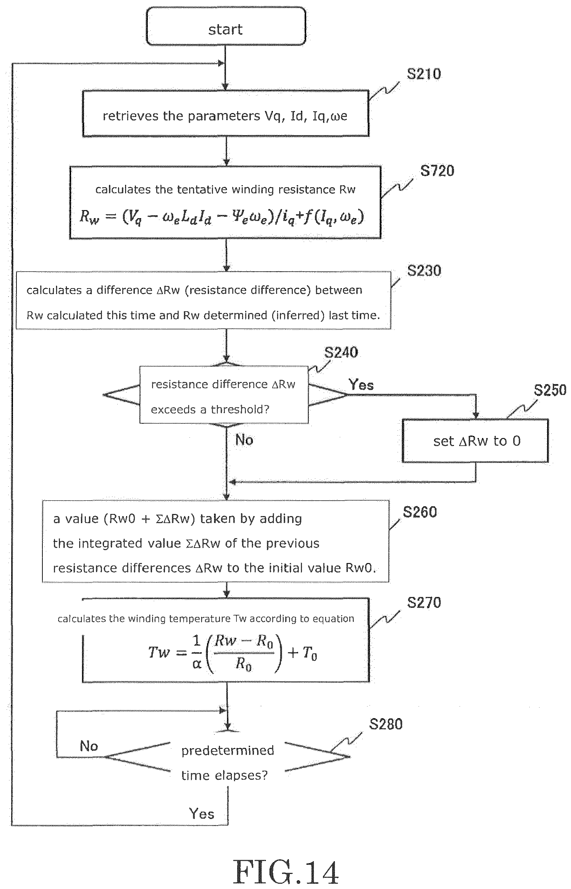

Fig. 14 is a flowchart that illustrates an example in which the offset method and the differential method are combined together. Processing in Fig. 14 is the same as processing illustrated in Fig. 7 except step S720. Step S220 in Fig. 7 has been replaced with step S720. In step S720, the temperature inferring unit 350 calculates the tentative winding resistance Rw according to equation (6) instead of equation (5). Due to processing illustrated in Fig. 14, effects in the offset method in this embodiment can be obtained besides the effects in the differential method in the first embodiment. As a result, error can be further reduced.

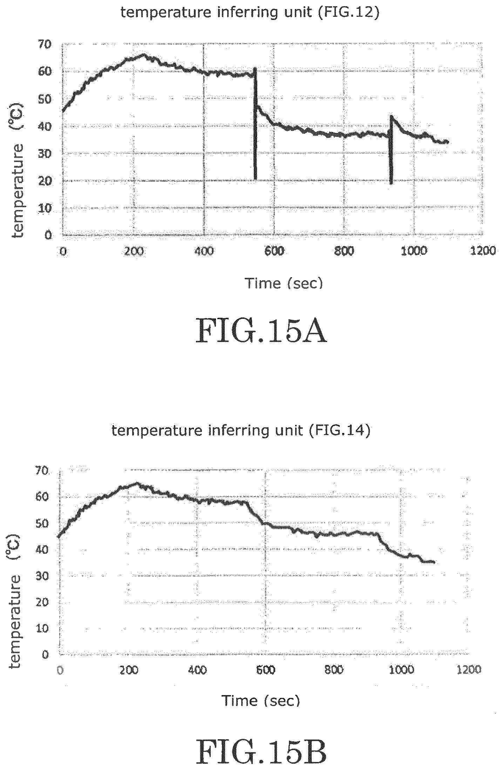

Fig. 15A and Fig. 15B illustrate effects in the temperature inference method illustrated in Fig. 14. Fig. 15A illustrates an example of time-dependent changes in winding temperature inferred by using only the offset method illustrated in Fig. 12. Fig. 15B illustrates an example of time-dependent changes in winding temperature inferred by using a combination of the offset method and differential method, which are illustrated in Fig. 14. By combining the offset method and differential method together, it was confirmed that error at the moment at which the load state changes is greatly reduced.

Next, a variation of this embodiment will be described. In this embodiment as well, all variations described for the first embodiment can be applied. For example, the variations that have been described while Figs. 8 to 10 were referenced can be applied to this embodiment as well. As an example, an example in which the variations illustrated in Figs. 8 to 10 are combined together will be described.

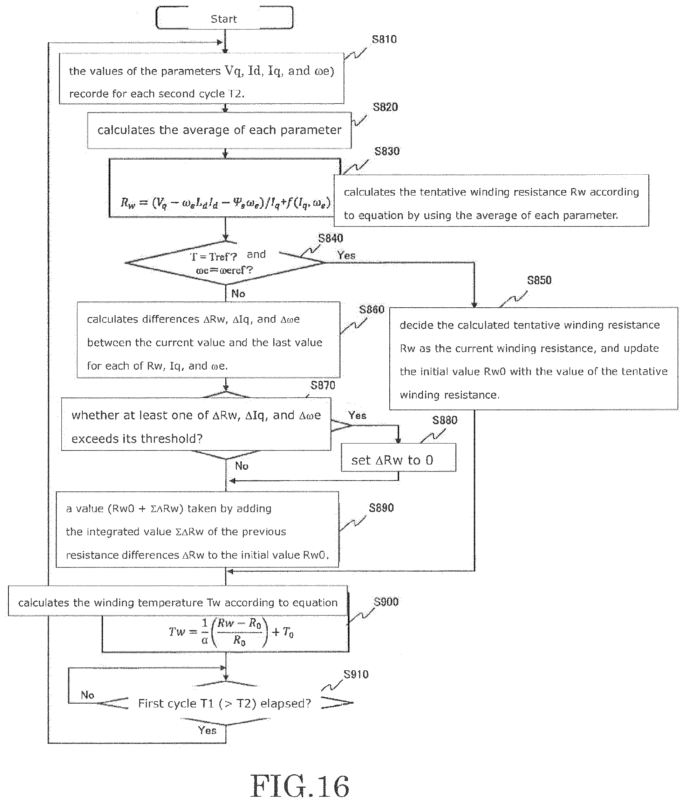

Fig. 16 is a flowchart that illustrates a variation of this embodiment. Temperature inference processing in this variation includes processing in steps S810 to S910 indicated in Fig. 16. Steps S810 and S820 are respectively the same as steps S310 and S320 indicated in Fig. 9. The temperature inferring unit 350 retrieves, from the RAM 380, parameters (Vq, Id, Iq, and ωe) recorded at intervals of the second cycle T2 and calculates the average of each parameter. In step S830, the temperature inferring unit 350 calculates the tentative winding resistance Rw from equation (6) by using the average of each parameter. In step S840, the temperature inferring unit 350 decides whether the load state is similar to a reference state by comparing torque T with the reference value Tref and compring the rotor speed ωe with the reference value ωeref. If the load state is similar to the reference state, the temperature inferring unit 350 proceeds to step S850, where the temperature inferring unit 350 determines the tentative winding resistance Rw as the curernt Rw and updats the initial value Rw0 with the current Rw. After step S850, the temperature inferring unit 350 proceeds to step S900. If the load state is not similar to the reference state, the temperature inferring unit 350 executes operations in steps S860, S870, S880, S890, S900, and S910. The operations in steps S860, S870, S880, S890, S900, and S910 are similar to operatoins in steps S230', S240', S250', S260, S270, and S280 indicated in Fig. 8, so decriptions will be omitted.

According to the operations in Fig. 16, effects due to the averaging of parameters, a reset operation, and the detection of a change, in the load state, based on the time-dependent changes of a plurality of parameters are obtained besides the effects due to the offset method and differential method. Therefore, the MCU 300 can be still more accurately inferred.

Next, an example of control in which the inferred winding temperature Tw is used will be described.

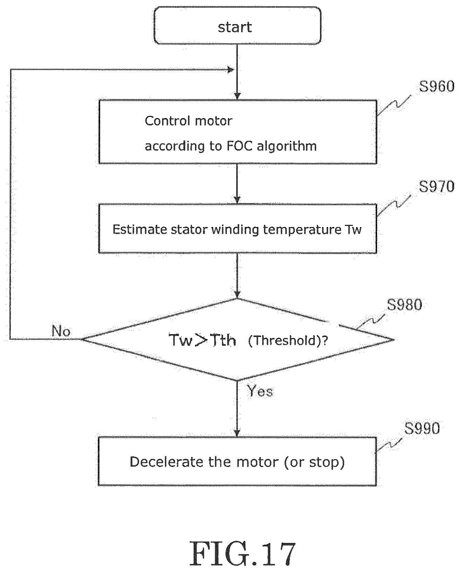

Fig. 17 is a flowchart illustrating an example of a control method executed by a motor module. The control method includes processing in steps S960 to S990 indicated in Fig. 17. In step S960, the motor control circuit 200 controls the motor 100 according to an FOC algorithm. A specific example of this control is as described while Fig. 2 was referenced. In step S970, the temperature inferring unit 350 performs processing to infer the temperature Tw of the stator windings in any one of the methods described above. In step S980, the MCU 300 in the motor control circuit 200 decides whether the inferred temperature Tw exceeds a threshold Tth. If the temperature Tw exceeds the threshold Tth, the MCU 300 proceeds to step S990, where the MCU 300 reduces the rotor speed of the motor 100. For example, the MCU 300 completely stops the motor 100 or sets the rotor speed to a lower value. More specifically, the MCU 300 reduces the rotor speed of the motor 100 by adjusting control signals to be supplied to a plurality of switching elements in the inverter circuit 400. If the inferred temperature Tw is equal to or lower than the threshold Tth, the MCU 300 returns to step S960. The threshold Tth can be set to, for example, the maximum allowable temperature in the specifications of the motor 100.

Due to the above operations, when temperature is high, the motor 100 is stopped or its speed is reduced. Therefore, the reliability of the system can be improved.

According to the embodiments in the present disclosure, a temperature sensor-less module that infers the temperature of stator windings with high accuracy can be implemented without using a temperature sensor. Therefore, even in an application in which it is difficult to mount a temperature sensor, the temperature sensor-less module can be preferably used. The motor module in the embodiments in the present disclosure can be preferably used in, for example, a UAV (unmanned aerial vehicle, which is a so-called drone), an automated guided vehicle (AGV), or a movable body such as a robot or in an arbitrary electrically operated unit such as an axial fan. Since temperature can be accurately inferred without using a temperature sensor, it is possible to perform intelligent control according to inferred temperature with a control circuit such as, for example, an MCU alone. As an example, an application is also possible in which a control circuit sends information about the temperature of a unit to an external server computer through communication, and the server computer accumulates the temperature information and uses for various purposes.

Industrial Applicability

The technology in the present disclosure can be applied to an application in which the temperature of stator windings in an alternating-current motor such as, for example, a permanent magnet synchronous motor.

Reference Signs List

 100 electric motor
 200 motor control circuit (motor controller)
 300 controller (MCU)
 310 A-D converter
 320 Clarke conversion module
 322 Park conversion module
 331 rotor speed inferring unit
 332 PI controller (that determines current command values)
 333 PI controller (that determines voltage command values)
 334 reverse Park conversion module
 335 SV generator
 340 PWM driver
 350 temperature inferring unit (temperature inferring apparatus)
 352 winding resistance inferring module
 354 winding temperature inferring module
 360 CPU
 370 ROM
 380 RAM
 400 inverter circuit
 500 current sensor unit
 600 rotor angle inferring unit

**Claims**

1. A motor module comprising:

 an electric motor that has a rotor and a stator, the stator having a plurality of windings;

a current sensor unit that monitors currents, each of which flows in one of the plurality of windings;
a rotor angle inferring unit that creates a rotor position signal that indicates an angular position of the rotor; and
a motor control circuit connected to the electric motor, the motor control circuit controlling a rotation of the rotor by applying a voltage to the plurality of windings;

wherein

the motor control circuit has a temperature inferring unit that repeats processing to infer an electric resistance and a temperature of the plurality of windings, and
the processing includes
a step of calculating a tentative electric resistance of the plurality of windings according to an equation that stipulates a relationship between an electric resistance and a group of parameters that include a voltage, a current, and a rotor speed, the parameters being used to control the rotation of the rotor,
a step of calculating a resistance difference between the tentative electric resistance and an electric resistance inferred last time,
a step of inferring the electric resistance by adding an integrated value of calculated resistance differences to an initial value of the inferred electric resistance, a resistance difference, which is one of the calculated resistance differences, being excluded from the integrated value if the resistance difference exceeds a threshold, and
a step of inferring the temperature of the plurality of windings according to the inferred electric resistance.

2. The motor module according to Claim 1, wherein, of the calculated resistance differences, the resistance difference calculated at a time when a difference between a current value and a last value of the current or the rotor speed exceeds a threshold is further excluded from the integrated value.

3. The motor module according to Claim 1 or 2, wherein:

the electric motor is a permanent magnet synchronous motor; and
the motor control circuit controls the rotation of the rotor by applying a voltage to the plurality of windings according to a field oriented control algorithm.

4. The motor module according to Claim 3, wherein the temperature inferring unit infers the tentative electric resistance at each time according to an equation below, assuming that Rw is the tentative electric resistance, Vq is a q-axis voltage, ωe is an electric angular speed of the rotor, Id is a d-axis current, Iq is a q-axis current, Ld is a d-axis inductance of the plurality of windings, and ψe is a magnetic flux linkage of the plurality of winding due to a magnetic flux from the rotor.

[Math. 1]

$$R_w = (V_q - \omega_e L_d I_d - \Psi_e \omega_e)/I_q$$

5. The motor module according to Claim 3, wherein the temperature inferring unit infers the tentative electric resistance at each time according to an equation below, assuming that Rw is the tentative electric resistance, Vq is a q-axis voltage, ωe is an electric angular speed of the rotor, Id is a d-axis current, Iq is a q-axis current, Ld is a d-axis inductance of the plurality of windings, ψe is a magnetic flux linkage of the plurality of winding due to a magnetic flux from the rotor, and f(Id, ωe) is a function of Iq and ωe.

[Math. 2]

$$R_w = (V_q - \omega_e L_d I_d - \Psi_e \omega_e)/I_q + f(I_q, \omega_e)$$

6. The motor module according to Claim 5, wherein the temperature inferring unit infers the tentative electric resistance at each time according to an equation below, assuming that α is a parameter that depends on Iq and ωe and that ω0 is the electric angular speed of the rotor in a reference state.

[Math. 3]

$$R_w = (V_q - \omega_e L_d I_d - \Psi_e \omega_e)/I_q + \alpha(\omega_e - \omega_0)$$

7. The motor module according to any one of Claims 4 to 6, wherein:

Vq is a voltage command value determined by the control circuit; and
Id and Iq are calculated according to a plurality of currents monitored by the current sensor unit and to the rotor position signal.

8. The motor module according to any one of Claims 1 to 7, wherein the temperature inferring unit determines the initial value of the inferred electric resistance according to the equation.

9. The motor module according to any one of Claims 1 to 8, wherein if the inferred temperature exceeds a threshold, the motor control circuit reduces the rotor speed.

10. The motor module according to any one of Claims 1 to 9, wherein the step of inferring the electric resistance includes a step of deciding whether a load state is similar to a reference state according to the group of parameters, and a step of, if the load state is similar to the reference state, inferring the calculated tentative electric resistance as the electric resistance and updating the initial value of the inferred electric resistance with a value of the tentative electric resistance.

11. The motor module according to any one of Claims 1 to 10, wherein the temperature inferring unit repeats the processing in a first cycle, the first cycle being longer than a second cycle in which the group of parameters are calculated, obtains an average of each parameter over the first cycle, and calculates the tentative electric resistance by using the average of each parameter.

12. A motor controller that controls an electric motor, wherein:

the electric motor has a rotor and a stator, the stator having a plurality of windings;
the motor controller
controls a rotation of the rotor by applying a voltage to the plurality of windings, and
has a temperature inferring unit that repeats processing to infer an electric resistance and a temperature of the plurality of windings; and
the processing includes
a step of calculating a tentative electric resistance of the plurality of windings according to an equation that stipulates a relationship between an electric resistance and a group of parameters that include a voltage, a current, and a rotor speed, the parameters being used to control the rotation of the rotor,
a step of calculating a resistance difference between the tentative electric resistance and an electric resistance inferred last time,
a step of inferring the electric resistance by adding an integrated value of calculated resistance differences to an initial value of the inferred electric resistance, a resistance difference, which is one of the calculated resistance differences, being excluded from the integrated value if the resistance difference exceeds a threshold, and
a step of inferring the temperature of the plurality of windings according to the inferred electric resistance.

13. A temperature inferring unit used in a motor controller that controls an electric motor, wherein:

the electric motor has a rotor and a stator, the stator having a plurality of windings;
the motor controller controls a rotation of the rotor by applying a voltage to the plurality of windings;
the temperature inferring unit repeats processing to infer an electric resistance and a temperature of the plurality of windings; and
the processing includes
a step of calculating a tentative electric resistance of the plurality of windings according to an equation that stipulates a relationship between an electric resistance and a group of parameters that include a voltage, a current, and a rotor speed, the parameters being used to control the rotation of the rotor,

a step of calculating a resistance difference between the tentative electric resistance and an electric resistance inferred last time,

a step of inferring the electric resistance by adding an integrated value of calculated resistance differences to an initial value of the inferred electric resistance, a resistance difference, which is one of the calculated resistance differences, being excluded from the integrated value if the resistance difference exceeds a threshold, and

a step of inferring the temperature of the plurality of windings according to the inferred electric resistance.

14. A method of inferring a temperature of a plurality of windings in a stator of an electric motor, the method comprising steps in which processing to infer an electric resistance and a temperature of the plurality of windings,

wherein

the processing includes

a step of calculating a tentative electric resistance of the plurality of windings according to an equation that stipulates a relationship between an electric resistance and a group of parameters that include a voltage, a current, and a rotor speed, the parameters being used to control the rotation of the rotor,

a step of calculating a resistance difference between the tentative electric resistance and an electric resistance inferred last time,

a step of inferring the electric resistance by adding an integrated value of calculated resistance differences to an initial value of the inferred electric resistance, a resistance difference, which is one of the calculated resistance differences, being excluded from the integrated value if the resistance difference exceeds a threshold, and

a step of inferring the temperature of the plurality of windings according to the inferred electric resistance.

15. A motor module comprising:

an electric motor that has a rotor and a stator, the stator having a plurality of windings;

a current sensor unit that monitors currents, each of which flows in one of the plurality of windings;

a rotor angle inferring unit that creates a rotor position signal that indicates an angular position of the rotor; and

a motor control circuit connected to the electric motor, the motor control circuit controlling a rotation of the rotor by applying a voltage to the plurality of windings;

wherein

the motor control circuit has a temperature inferring unit that repeats processing to infer an electric resistance and a temperature of the plurality of windings, and

the processing includes

a step of calculating a tentative electric resistance of the plurality of windings according to an equation that stipulates a relationship between an electric resistance and a group of parameters that include a voltage, a current, and a rotor speed, the parameters being used to control the rotation of the rotor,

a step of calculating a resistance difference between the tentative electric resistance and an electric resistance inferred last time,

a step of detecting a change in a load state according to the group of parameters,

a step of inferring the electric resistance by adding an integrated value of calculated resistance differences to an initial value of the inferred electric resistance, a resistance difference, which is one of the calculated resistance differences, being excluded from the integrated value if the resistance difference is calculated when a change in the load state is detected, and

a step of inferring the temperature of the plurality of windings according to the inferred electric resistance.

16. A motor controller that controls an electric motor, wherein:

the electric motor has a rotor and a stator, the stator having a plurality of windings;

the motor controller

controls a rotation of the rotor by applying a voltage to the plurality of windings, and

has a temperature inferring unit that repeats processing to infer an electric resistance and a temperature of the plurality of windings; and

the processing includes

a step of calculating a tentative electric resistance of the plurality of windings according to an equation that stipulates a relationship between an electric resistance and a group of parameters that include a voltage, a current, and a rotor speed, the parameters being used to control the rotation of the rotor,

a step of calculating a resistance difference between the tentative electric resistance and an electric resistance inferred last time,
a step of detecting a change in a load state according to the group of parameters,
a step of inferring the electric resistance by adding an integrated value of calculated resistance differences to an initial value of the inferred electric resistance, a resistance difference, which is one of the calculated resistance differences, being excluded from the integrated value if the resistance difference is calculated when a change in the load state is detected, and
a step of inferring the temperature of the plurality of windings according to the inferred electric resistance.

17. A temperature inferring unit used in a motor controller that controls an electric motor, wherein:

the electric motor has a rotor and a stator, the stator having a plurality of windings;
the motor controller controls a rotation of the rotor by applying a voltage to the plurality of windings;
the temperature inferring unit repeats processing to infer an electric resistance and a temperature of the plurality of windings; and
the processing includes
a step of calculating a tentative electric resistance of the plurality of windings according to an equation that stipulates a relationship between an electric resistance and a group of parameters that include a voltage, a current, and a rotor speed, the parameters being used to control the rotation of the rotor,
a step of calculating a resistance difference between the tentative electric resistance and an electric resistance inferred last time,
a step of detecting a change in a load state according to the group of parameters,
a step of inferring the electric resistance by adding an integrated value of calculated resistance differences to an initial value of the inferred electric resistance, a resistance difference, which is one of the calculated resistance differences, being excluded from the integrated value if the resistance difference is calculated when a change in the load state is detected, and
a step of inferring the temperature of the plurality of windings according to the inferred electric resistance.

18. A method of inferring a temperature of a plurality of windings in a stator of an electric motor, the method comprising steps in which processing to infer an electric resistance and a temperature of the plurality of windings,
wherein
the processing includes
a step of calculating a tentative electric resistance of the plurality of windings according to an equation that stipulates a relationship between an electric resistance and a group of parameters that include a voltage, a current, and a rotor speed, the parameters being used to control the rotation of the rotor,
a step of calculating a resistance difference between the tentative electric resistance and an electric resistance inferred last time,
a step of detecting a change in a load state according to the group of parameters,
a step of inferring the electric resistance by adding an integrated value of calculated resistance differences to an initial value of the inferred electric resistance, a resistance difference, which is one of the calculated resistance differences, being excluded from the integrated value if the resistance difference is calculated when a change in the load state is detected, and
a step of inferring the temperature of the plurality of windings according to the inferred electric resistance.

200

100

400

inverter circuit

motor

300

controller

500

350

temperature
inferring unit

current
sensor unit

600 rotor angle
inferring unit

# FIG.1A

FIG.1B

FIG.2

FIG.3

winding resistance of the stator   Rw

FIG.4A

winding temperature of the stator   Tw

$$Tw = \frac{1}{\alpha}\left(\frac{Rw - R_0}{R_0}\right) + T_0$$

FIG.4B

start

retrieves the parameters Vq, Id, Iq — S110

calculates the winding resistance Rw according to equation — S120

$$R_w = (V_q - \omega_e L_d I_d - \Psi_e \omega_e)/I_q$$

calculates the winding temperature Tw according to equation — S130

$$Tw = \frac{1}{\alpha}\left(\frac{Rw - R_0}{R_0}\right) + T_0$$

predetermined time elapses? — S140

No

Yes

FIG.5

torque changes, constant rotational speed

FIG.6A

Change in rotational speed, constant torque

FIG.6B

start

S210

retrieves the parameters Vq, Id, Iq, ωe

S220

calculates the tentative winding resistance Rw

$$R_w = (V_q - \omega_e L_d I_d - \Psi_e \omega_e)/I_q$$

S230

calculates a difference ΔRw (resistance difference) between Rw calculated this time and Rw determined (inferred) last time.

S240

resistance difference ΔRw

exceeds a threshold?

Yes

S250

set ΔRw to 0

No

S260

a value (Rw0 + ΣΔRw) taken by adding

the integrated value ΣΔRw of the previous

resistance differences ΔRw to the initial value Rw0.

S270

calculates the winding temperature Tw according to equation

$$Tw = \frac{1}{\alpha}\left(\frac{Rw - R_0}{R_0}\right) + T_0$$

S280

No

predetermined

time elapses?

Yes

# FIG.7

start

S210

retrieves the parameters Vq, Id, Iq, ωe

S220

calculates the tentative winding resistance Rw

$$R_w = (V_q - \omega_e L_d I_d - \Psi_e \omega_e)/I_q$$

S230'

calculates differences ΔRw, ΔIq, and Δωe

between the current value and the last value for each of Rw, Iq, and ωe.

S240'

whether at least one of ΔRw, ΔIq, and Δωe

exceeds its threshold?        Yes

S250

set ΔRw to 0

No

S260

a value (Rw0 + ΣΔRw) taken by adding

the integrated value ΣΔRw of the previous

resistance differences ΔRw to the initial value Rw0.

S270

calculates the winding temperature Tw according to equation

$$Tw = \frac{1}{\alpha}\left(\frac{Rw - R_0}{R_0}\right) + T_0$$

S280

No        predetermined

time elapses?

Yes

FIG.8

start

S310
the values of the parameters Vq, Id, Iq, and ωe) recorde for each second cycle T2.

S320
calculates the average of each parameter

S330
calculates the tentative winding resistance Rw according to equation by using the average of each parameter.

$$R_w = (V_q - \omega_e L_d I_d - \Psi_e \omega_e)/I_q$$

S340
calculates a difference ΔRw (resistance difference) between Rw calculated this time and Rw determined (inferred) last time.

S350
resistance difference ΔRw exceeds a threshold? — Yes → S360 set ΔRw to 0

No

S370
a value (Rw0 + ΣΔRw) taken by adding the integrated value ΣΔRw of the previous resistance differences ΔRw to the initial value Rw0.

S380
calculates the winding temperature Tw according to equation

$$Tw = \frac{1}{\alpha}\left(\frac{Rw - R_0}{R_0}\right) + T_0$$

S390
No ← First cycle T1 (> T2) elapsed?

Yes

FIG.9

27

start

retrieves the parameters Vq, Id, Iq,ωe    S210

calculates the tentative winding resistance Rw    S220

$$R_w = (V_q - \omega_e L_d I_d - \Psi_e \omega_e)/I_q$$

S410

T = Tref?   and
ωe = ωeref?    Yes

No

S420

decide the calculated tentative winding resistance
Rw as the current winding resistance, and update
the initial value Rw0 with the value of the tentative
winding resistance.

calculates a difference ΔRw (resistance difference) between
Rw calculated this time and Rw determined (inferred) last time.    S230

resistance difference ΔRw
exceeds a threshold?    Yes    S250    S240

set ΔRw to 0

No

a value (Rw0 + ΣΔRw) taken by adding
the integrated value ΣΔRw of the previous
resistance differences ΔRw to the initial value Rw0.    S260

calculates the winding temperature Tw according to equation    S270

$$Tw = \frac{1}{\alpha}\left(\frac{Rw - R_0}{R_0}\right) + T_0$$

S280

No    predetermined
time elapses?

Yes

# FIG.10

FIG.11A

FIG.11B

```
                    ┌──────────────────────┐
                    │        start         │
                    └──────────────────────┘
                                │
                                ▼                              S610
        ┌──────────────────────────────────────────┐    ⟋
        │   retrieves the parameters Vq, Id, Iq,ωe  │
        └──────────────────────────────────────────┘
                                │
                                ▼                              S620
        ┌──────────────────────────────────────────┐    ⟋
        │ calculates the winding resistance Rw according to equation │
        │                                            │
```

$$R_w = (V_q - \omega_e L_d I_d - \Psi_e \omega_e)/I_q + f(I_q, \omega_e)$$

```
        └──────────────────────────────────────────┘
                                │
                                ▼                              S630
        ┌──────────────────────────────────────────┐    ⟋
        │ calculates the winding temperature Tw according to equation │
```

$$Tw = \frac{1}{\alpha}\left(\frac{Rw - R_0}{R_0}\right) + T_0$$

```
        └──────────────────────────────────────────┘
                                │
                                ▼
                        ╱───────────────╲                     S640
                  No  ╱    predetermined   ╲                ⟋
              ◄──────      time elapses?      ─────
                        ╲───────────────╱
                                │
                               Yes
```

## FIG.12

FIG.13

start

S210

retrieves the parameters Vq, Id, Iq, ωe

S720

calculates the tentative winding resistance Rw

$$R_w = (V_q - \omega_e L_d I_d - \Psi_e \omega_e)/i_q + f(I_q, \omega_e)$$

S230

calculates a difference ΔRw (resistance difference) between Rw calculated this time and Rw determined (inferred) last time.

S240

resistance difference ΔRw exceeds a threshold?

Yes

S250

set ΔRw to 0

No

S260

a value (Rw0 + ΣΔRw) taken by adding the integrated value ΣΔRw of the previous resistance differences ΔRw to the initial value Rw0.

S270

calculates the winding temperature Tw according to equation

$$Tw = \frac{1}{\alpha}\left(\frac{Rw - R_0}{R_0}\right) + T_0$$

S280

No

predetermined time elapses?

Yes

FIG.14

32

temperature inferring unit (FIG.12)

FIG.15A

temperature inferring unit (FIG.14)

FIG.15B

FIG.16

start

Control motor
according to FOC algorithm                    S960

Estimate stator winding temperature Tw        S970

No    Tw>Tth (Threshold)?                      S980

Yes

Decelerate the motor (or stop)                S990

FIG.17

<div align="center">

**INTERNATIONAL SEARCH REPORT**

</div>

| International application No. |
|---|
| PCT/JP2017/025799 |

A.   CLASSIFICATION OF SUBJECT MATTER
*H02P29/64*(2016.01)i, *G01K7/00*(2006.01)i, *H02P21/14*(2016.01)i, *H02P21/26* (2016.01)i

According to International Patent Classification (IPC) or to both national classification and IPC

B.   FIELDS SEARCHED

Minimum documentation searched (classification system followed by classification symbols)
H02P29/64, G01K7/00, H02P21/14, H02P21/26

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2014-11861 A  (Mitsuba Corp.), 20 January 2014 (20.01.2014), entire text; all drawings (Family: none) | 1-18 |
| A | JP 2012-50261 A  (JTEKT Corp.), 08 March 2012 (08.03.2012), entire text; all drawings (Family: none) | 1-18 |
| A | JP 2011-15584 A  (Toshiba Machine Co., Ltd.), 20 January 2011 (20.01.2011), entire text; all drawings (Family: none) | 1-18 |

| ☒   Further documents are listed in the continuation of Box C. | ☐   See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search     15 September 2017 (15.09.17) | Date of mailing of the international search report     26 September 2017 (26.09.17) |
|---|---|
| Name and mailing address of the ISA/     Japan Patent Office     3-4-3,Kasumigaseki,Chiyoda-ku,     Tokyo 100-8915,Japan | Authorized officer


Telephone No. |

Form PCT/ISA/210 (second sheet) (January 2015)

**INTERNATIONAL SEARCH REPORT**

International application No.

PCT/JP2017/025799

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-122857 A  (Nissan Motor Co., Ltd.),<br>02 July 2015 (02.07.2015),<br>entire text; all drawings<br>(Family: none) | 1-18 |
| A | WO 2015/022722 A1  (Mitsubishi Electric Corp.),<br>19 February 2015 (19.02.2015),<br>entire text; all drawings<br>& US 2016/0134225 A1<br>entire text; all drawings | 1-18 |
| A | US 2010/0194329 A1  (LU Bin),<br>05 August 2010 (05.08.2010),<br>entire text; all drawings<br>& WO 2010/086729 A2 | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012130162 A
- JP 2013146155 A
- JP 2014230486 A